# EUROPEAN PATENT APPLICATION

(11) **EP 2 315 436 A1**
(43) Date of publication of application: **27.04.2011**
(21) Application number: 10178600.2
(22) Date of filing: 23.09.2010
(51) Int. Cl.: H04N 5/44, G06F 3/041

(54) **Image processing apparatus and input control method thereof**

(30) Priority: 28.09.2009 KR 20090091548
(71) Applicant: SAMSUNG ELECTRONICS CO., LTD., Suwon-si Gyeonggi-do 442-742 (KR)
(72) Inventor: Na, Jae-chul, Gyeonggi-do (KR)
(74) Representative: Robinson, Ian Michael

(57) **Abstract**

An image processing apparatus and input control method thereof, are disclosed. The image processing apparatus includes: a display panel which displays an image; an image processing unit which processes the image to display in the display panel; a user input unit which receives a key selection from a user; and a control unit which generates a control signal to perform a first function based on an input key if a single key of a plurality of keys is input, and to perform a second function based on a mixture of an input key if at least two keys of the plurality of keys are input within a predetermined time. With this, depending on a position of keys and an input order, the number of keys necessary to perform various functions is reduced, providing a user with an intuitional user interface.

## Description

### Field

An apparatus and a method consistent with the exemplary embodiments relate to an image processing apparatus and an input control method thereof, and more particularly, to an image processing apparatus and an input control method thereof performing a function depending on a position of a key and an input order to reduce the number of keys necessary to perform various functions, and supplying an intuitional user interface to a user.

### Description of the Related Art

In a digital TV, a plurality of input buttons are generally attached to a TV main body, and a user pushes a button to perform a function. For example, since functions such as a channel up/down, a volume up/down, a menu, power, etc., are respectively performed by a single button, a button or a touch type input device for performing each function is necessary. Although the channel up/down button may perform different functions such as a menu navigation function, etc. depending on the state of the TV, a user is allowed to input a single button at one time.

Since a user is allowed to input only a single button at one time although a single button may perform different functions depending on the state of the TV, a lot of buttons are necessary to perform all functions needed for operation of the TV. Because the function of each button varies depending on the state of the TV, since it is necessary for a user to confirm a current state of the TV and to memorize how each button operates, it is inconvenient to use the buttons on the TV main body.

### SUMMARY

According to the present invention there is provided an apparatus and method as set forth in the appended claims. Other features of the invention will be apparent from the dependent claims, and the description which follows.

An aspect of the exemplary embodiments is to provide an image processing apparatus and an input control method thereof disposing a plurality of buttons or touch type input devices that move up/down and left/right to perform all existing functions such as a channel up/down, a volume up/down, a menu, a power, etc, thereby reducing cost and providing an intuitional user interface (UI) to a user.

Another aspect of the present invention is to provide an image processing apparatus and an input control method thereof which reduces the number of input buttons to reduce cost and supply an intuitional UI to a user. The hardware includes a plurality of buttons or touch type input devices which move up/down and left/right, thereby performing all of the existing button functions while reducing the number of input buttons attached to a main body of a digital TV, etc.

The foregoing and/or other aspects of the present invention can be achieved by providing an image processing apparatus, including: a display panel which displays an image; an image processing unit which processes the image to display in the display panel; a user input unit which receives a key selection from a user; and a control unit which generates a control signal to perform a first function corresponding to an input key if a single key of a plurality of keys is input, and to perform a second function corresponding to a mixture of an input key if at least two keys of the plurality of keys are input within a predetermined time.

The second function may be determined based upon a mixture of the kind of keys of the plurality of keys and the order in which the keys are input.

The user input unit may receive the key selection by at least one of a contact with the display panel and an input of a key signal.

The display panel may include at least one predetermined recognition area sensing at least one contact of a user and a pointing device.

The control unit may drive the display panel to sense at least one contact of the user and the pointing device, only in the predetermined recognition area.

The user input unit may receive at least one predetermined key signal.

The control unit may control the user input unit to receive only the predetermined key signal.

The plurality of keys may be arranged in at least one of a linear shape, a circular shape and a three dimensional shape.

The key selection may be performed by at least one of a touch action, a drag action, a touch action repeated predetermined times and a touch action continuing for a predetermined time.

Another aspect of the present invention may be achieved by providing an input control method of an image processing apparatus, including: receiving a key selection from a user; generating a control signal to perform a first function corresponding to an input key if a single key of a plurality of keys is input, and to perform a second function corresponding to a mixture of input keys if at least two keys of the plurality of keys are input within a predetermined time; and performing the first function or the second function depending on the control signal.

The second function may be differently determined depending on a mixture of the kind of keys input of the plurality of keys and an input order.

The key selection may be received by at least one of a contact of a display panel and an input of a key signal.

A display panel may include at least one predetermined recognition area sensing at least one contact of a user, and a pointing device.

The at least one contact of the user and the pointing device may be sensed only in the predetermined recognition area.

At least one predetermined key signal may be received.

Only a predetermined key signal may be received.

The plurality of keys may be arranged in at least one of a linear shape, a circular shape and a three dimensional shape.

The key selection may be performed by at least one action of a touch action, a drag action, a touch action repeated predetermined times and a touch action continuing for a predetermined time.

### BRIEF DESCRIPTION OF THE DRAWINGS

The exemplary embodiments will become apparent from the following description, taken in conjunction with the accompanying drawings, in which:

FIG. 1 illustrates a configuration of an image processing apparatus according to an exemplary embodiment;

FIG. 2A illustrates a key selecting method according to an exemplary embodiment;

FIG. 2B illustrates a key selecting method according to another exemplary embodiment;

FIG. 2C illustrates a key selecting method according to still another exemplary embodiment;

FIG. 3A illustrates a plurality of keys arranged in a linear shape;

FIG. 3B illustrates a plurality of keys arranged in a circular shape;

FIG. 3C illustrates a plurality of keys arranged in a three dimensional shape;

FIG. 4 illustrates a key input method according to an exemplary embodiment;

FIG. 5 illustrates a key input method according to another exemplary embodiment; and

FIG. 6 illustrates a key input method according to still another exemplary embodiment.

### DETAILED DESCRIPTION OF EXEMPLARY EMBODIMENTS

Reference will now be made in detail to the exemplary embodiments of the present invention, examples of which are illustrated in the accompanying drawings, wherein like reference numerals refer to like elements throughout. The exemplary embodiments are described below so as to explain them by referring to the figures. Repetitive description with respect to like elements of different embodiments may be omitted for the convenience of clarity.

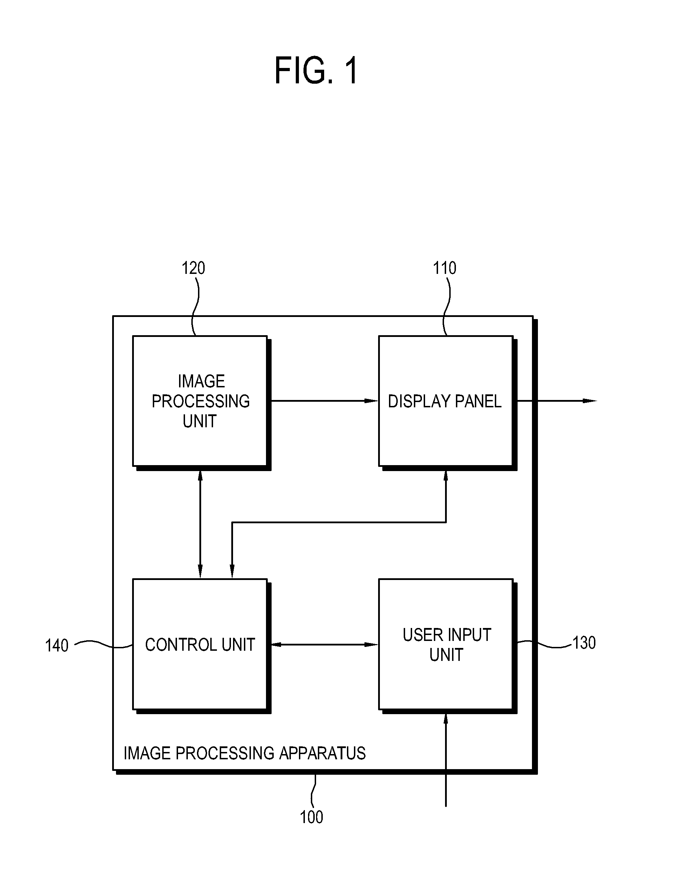

FIG. 1 illustrates a configuration of an image processing apparatus according to an exemplary embodiment.

An image processing apparatus 100 according to an exemplary embodiment may be embodied as a television (TV), a personal computer (PC), a monitor, a mobile terminal, a digital versatile disk (DVD) player, etc. The image processing apparatus 100 may be embodied as an electronic apparatus, as long as it can perform a plurality of functions through a key input.

The image processing apparatus 100 according to the present exemplary embodiment may include a display panel 110, an image processing unit 120, a user input unit 130 and a control unit 140.

An image may be displayed in the display panel 110.

According to the present exemplary embodiment, the display panel 110 may be a touch screen, or a touch panel. The display panel 110 may include at least one predetermined recognition area sensing at least one contact of a user, and a pointing device.

The display panel 110 may employ a liquid crystal display (LCD), an organic light emitting diode (OLED), a plasma display panel (PDP), etc.

The image processing unit 120 may process an image to be displayed on display panel 110.

The user input unit 130 may receive a key selection from a user. The key selection may be input by at least one of a touch action, a drag action, a touch action repeated by predetermined times and a touch action continuing for a predetermined time.

According to an exemplary embodiment, the user input unit 130 may receive a key selection by a contact to the display panel 110. In particular, a user may contact a key displayed in a predetermined area of the display panel 110 by a finger or a pointing device. The user input unit 130 may receive at least one coordinate of a contacted area.

According to another exemplary embodiment, the user input unit 130 may receive a key selection by an input of a key signal. A user may press a key provided as a button on a main body of the image processing apparatus 100. The user input unit 130 may receive at least one predetermined key signal.

According to still another exemplary embodiment, the user input unit 130 may receive a key selection through a remote device. A user may press a key provided as a button on a remote device, or may contact to a key provided as a touch pad on a remote device. The user input unit 130 may receive at least one predetermined key signal from the remote device.

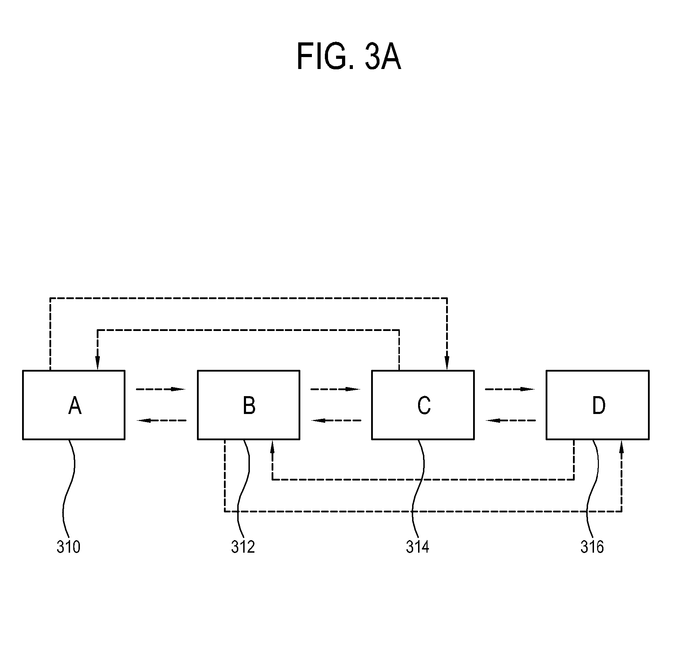

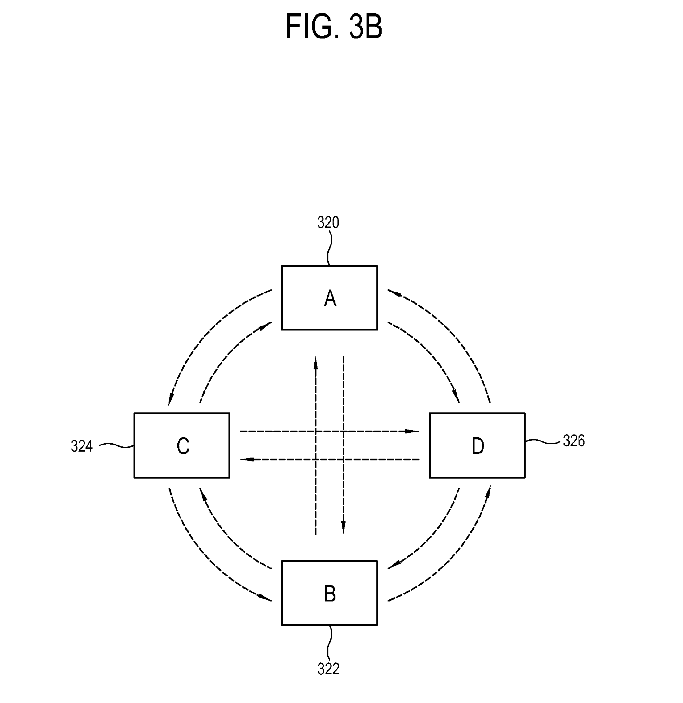

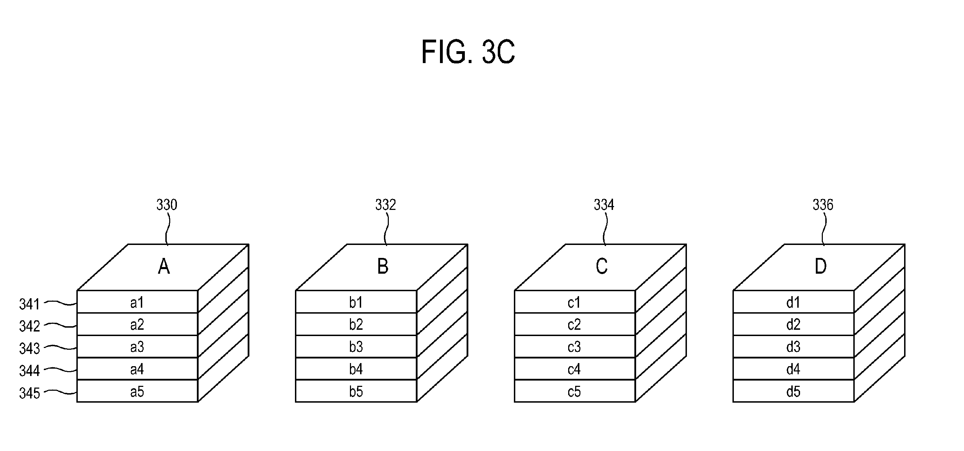

The control unit 140 may generate a control signal to perform a first function corresponding to an input key if one of a plurality of keys is input, and to perform a second function corresponding to a mixture of input keys if two or more keys of the plurality of keys are input within a predetermined time. The plurality of keys may be arranged in at least one shape of a linear shape, a circular shape and a three dimensional shape. This will be described in detail by referring to FIGS. 3A, 3B and 3C, below.

The first function is an inherent function allotted to each key. For example, the first function of a power key may be a function turning on or off an electric power. The first function of a menu key may be a function displaying a menu.

The second function is a function newly determined by a mixture of at least two keys. For example, the second function determined by a sequential input of the power key and the menu key may be a function displaying a preference channel. If a user inputs the power key and the menu key within a predetermined time in order, the image processing apparatus 100 converts a channel currently displayed to a preference channel.

According to an exemplary embodiment, the second function may be determined to be different depending on a mixture of the kind of keys and an input order. For example, a channel-up function may be determined to be performed if a key B is input after a key A is input, and on the contrary, a channel-down function may be determined to be performed if the key A is input after the key B is input.

According to another exemplary embodiment, the second function may be determined to be different depending on an action inputting a plurality of keys. For example, a channel up function may be determined to be performed if a key B is dragged after a key A is dragged, and a function converting to a prior channel may be determined to be performed if a key B is contacted after a key A is contacted.

The control unit 140 may drive the display panel 110 to sense at least one contact of a user and a pointing device in only a predetermined recognition area. In detail, the control unit 140 may measure a pressure change or a current change in only a predetermined recognition area.

The control unit 140 may control the user input unit 130 to receive only a predetermined key signal. In particular, the control unit 140 may receive an infrared (IR) signal of only a predetermined frequency band from a remote controller.

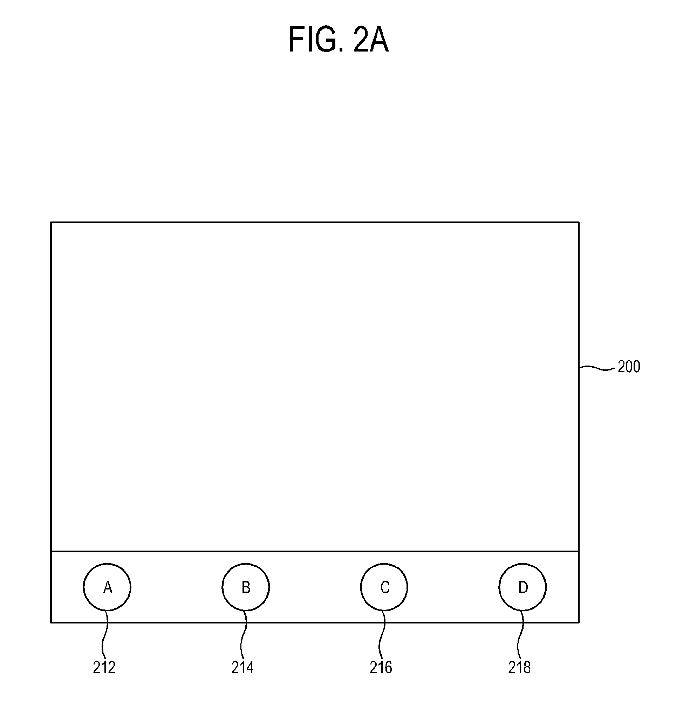

FIG. 2A illustrates a key selecting method according to an exemplary embodiment.

According to a key selecting method of an exemplary embodiment, the image processing apparatus may receive a key selection by a contact to a display panel 200. A user can contact keys 212, 214, 216 and 218 displayed in a predetermined area of the display panel 200, by the finger or a pointing device.

Referring to FIG. 2A, four keys 212, 214, 216 and 218 are displayed in a lower end part of the display panel 200. The image processing apparatus senses a contact in only the areas in which the four keys 212, 214, 216 and 218 are displayed, and does not sense a contact in the other areas.

As functions which the image processing apparatus performs increases, the number of keys displayed in the display panel increases. Accordingly, an area which could sense a contact also increases. If a plurality of keys are displayed over all areas of the display panel, it is necessary that the image processing apparatus senses a contact in all areas of the display panel. The number of sensors sensing a contact increases or an action sensing a contact increases, and accordingly, manufacturing and driving costs are increased.

According to the present exemplary embodiment, the number of keys displayed in the display panel is reduced, and a new function is determined based on a mixture of a plurality of keys. Accordingly, an area sensing a contact on the display panel can be reduced.

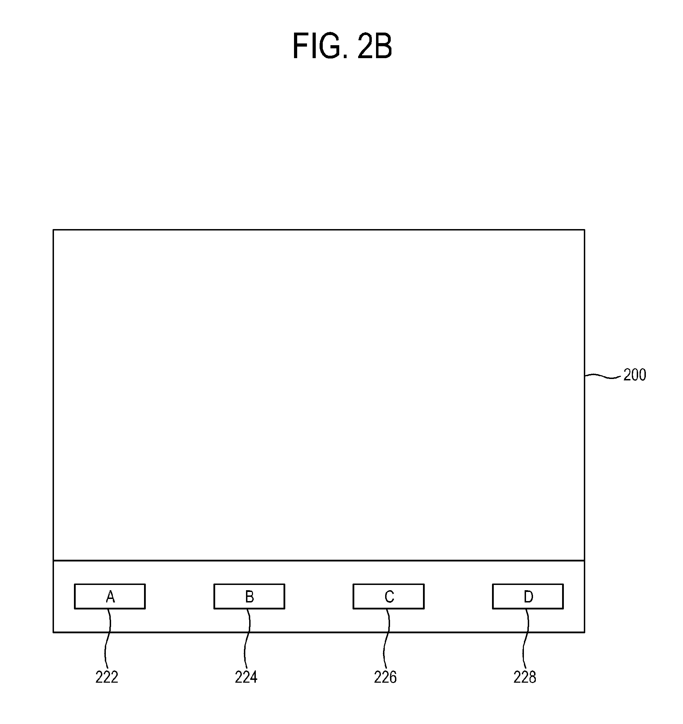

FIG. 2B illustrates a key selecting method according to another exemplary embodiment.

According to a key selecting method of another exemplary embodiment, the image processing apparatus may receive a key selection upon input of a key signal. A user can press button-type keys 222, 224, 226 and 228 provided in a main body of the image processing apparatus.

Referring to FIG. 2B, four button-type keys 222, 224, 226 and 228 are attached to a lower end part of the display panel 200. The image processing apparatus receives a key signal only through the four keys 222, 224, 226 and 228.

As functions performed by the image processing apparatus increases, the number of buttons attached to the image processing apparatus increases. As the number of the buttons increases, the manufacturing cost and the cost for recognizing a key signal corresponding to a button increases.

According to the present exemplary embodiment, the number of buttons attached to the display panel is reduced, and a new function is determined based on a mixture of a plurality of keys. Accordingly, a cost reduction can be realized.

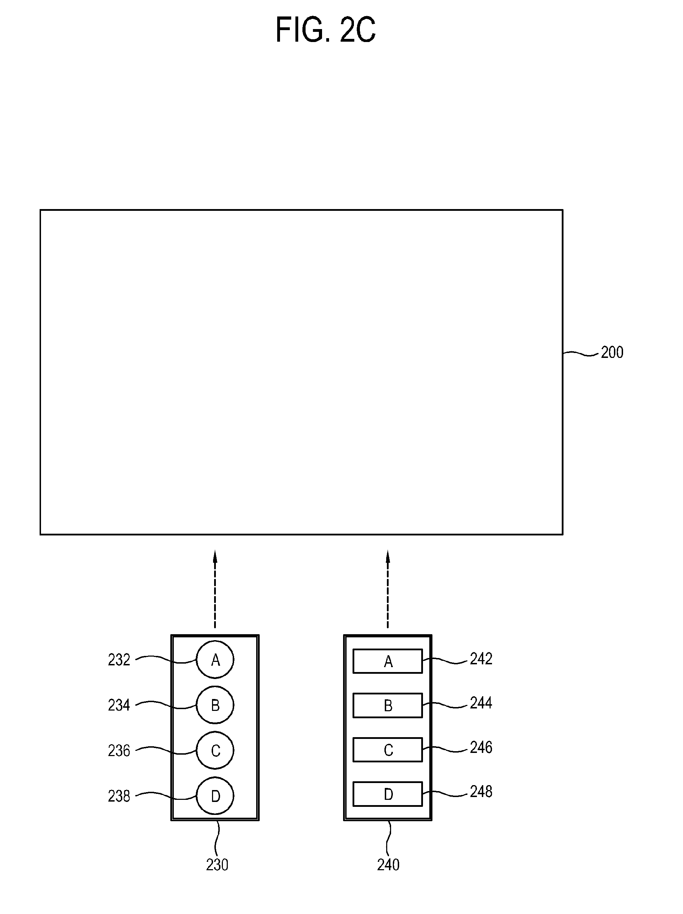

FIG. 2C illustrates a key selecting method according to still another exemplary embodiment.

According to a key selecting method of another exemplary embodiment, the image processing apparatus may receive a key selection by a remote device. A user can press a key embodied by a button on the remote device, or can contact a key embodied by a touch pad on the remote device.

Referring to FIG. 2C, the image processing apparatus 200 may be controlled by a remote device 230 of a touch pad, or a remote device 240 of a button input. Four keys A 232, B 234, C 236 and D 238 are displayed in the remote device 230 of the touch pad type. Four keys having button-type inputs A 242, B 244, C 246 and D 248 are attached to remote device 240. The image processing apparatus 200 may receive only a key signal corresponding to the four keys, that is, A, B, C and D. For example, the image processing apparatus 200 may receive only an IR signal corresponding to a predetermined frequency band from the remote controller.

As functions performed by the image processing apparatus increases, the kind of key signals which the image processing apparatus receives from a remote controller increases. Accordingly, a frequency band of a key signal which the image processing apparatus receives also increases.

According to the present exemplary embodiment, the number of key signals transmitted from a remote controller is reduced, and a new function is determined based on a mixture of a plurality of keys. Accordingly, the image processing apparatus receives only an IR signal corresponding to a predetermined frequency band, thereby reducing operation costs.

FIG. 3A illustrates a plurality of keys arranged in a linear shape.

A plurality of keys provided on an image processing apparatus or a remote device may be arranged in a linear shape. For example, as shown in FIG. 3A, a key A 310, a key B 312, a key C 314 and a key D 316 may be arranged in order along a line.

In this case, the image processing apparatus may perform various functions depending on the position of an input key and an input order. An arrow illustrated in FIG. 3A represents various mixtures with respect to the position of an input key and an input order. For example, there may be a sequential input of the key A 310 and the key B 312, a sequential input of the key B 312 and the key C 314, a sequential input of the key C 314 and the key D 316, etc. A new function may be determined for each of the various mixtures.

Alternatively, a remote device may generate a command for a function to be performed to transmit to the image processing apparatus based on a mixture of key button inputs to the remote device. For example, the remote device may generate a control signal allowing the function of transmitting to the image processing apparatus to be performed. The image processing apparatus may include a small number of key buttons for performing a function, or may not include a key button for separately performing a function.

FIG. 3B illustrates a plurality of keys arranged in a circular shape.

A plurality of keys provided to an image processing apparatus or a remote device may be arranged in a circular shape. For example, as shown in FIG. 3B, a key A 320 and a key B 322 are respectively disposed to upper and lower parts, and a key C 324 and a key D 326 are respectively disposed to left and right parts, so that the four keys can be arranged in a circular shape.

The image processing apparatus may perform a function depending on the position of an input key and an input order. In particular, by disposing a key up and down and left and right, a user can input up/down or left/right buttons in order, and a new function can be provided based on an input order of the up/down or left/right buttons. An arrow illustrated in FIG. 3B represents various mixtures regarding the position of an input key and an input order.

Inherent functions can be respectively allotted to the four keys of the key A 320, the key B 322, the key C 324 and the key D 326. For example, a power on/off function may be allotted to the key A 320, a menu function may be allotted to the key B 322, an input list function may be allotted to the key C 324, and an enter function may be allotted to the key D 326. If a user inputs each key one by one, the image processing apparatus performs an inherent function allotted to each key.

A new function may be allotted to a mixture of the four keys. According to an exemplary embodiment, a new function such as a channel up/down, a volume up/down, etc. may be allotted depending on an input order of up/down or left/right keys. For example, if a user wants to perform the channel up function, the key A 320 may be input directly after the key B 322 is input. On the contrary, if a user wants to perform the channel down function, the key B 322 may be input directly after the key A 320 is input. If using a touch pad, a user may contact key B 322 and the key A 320 in order, using a finger or a pointing device.

FIG. 3C illustrates a plurality of keys arranged in a three dimensional shape.

A plurality of keys provided to an image processing apparatus and a remote device may be arranged in a three dimensional shape. For example, as shown in FIG. 3C, a main key (a key A 330, a key B 332, a key C 334 and a key D 336) and a sub key (a key a1 341, a key a2 342, a key a3 343, a key a4 344 and a key a5 345) belonging to each main key may be arranged in a cubic shape currently displayed.

The image processing apparatus may perform a function depending on the position of an input key and an input order. In particular, new functions may be respectively determined based on various mixtures of the main key and a sub key. According to an exemplary embodiment, when a sub key is displayed, the main key may be used as a direction key.

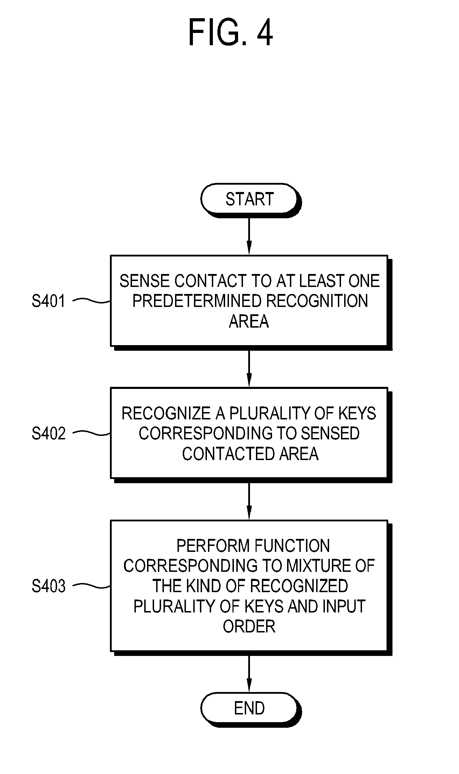

FIG. 4 illustrates a key input process according to an exemplary embodiment.

According to a key input process, an image processing apparatus 100 may receive a key selection by a contact to a display panel 110.

The image processing apparatus 100 senses a contact to at least one predetermined recognition area (S401). In this case, the image processing apparatus 100 recognizes a plurality of keys corresponding to the contacted sensed area (S402).

The image processing apparatus 100 performs a function corresponding to a mixture of the kind of recognized keys of the plurality of keys, and an input order (S403).

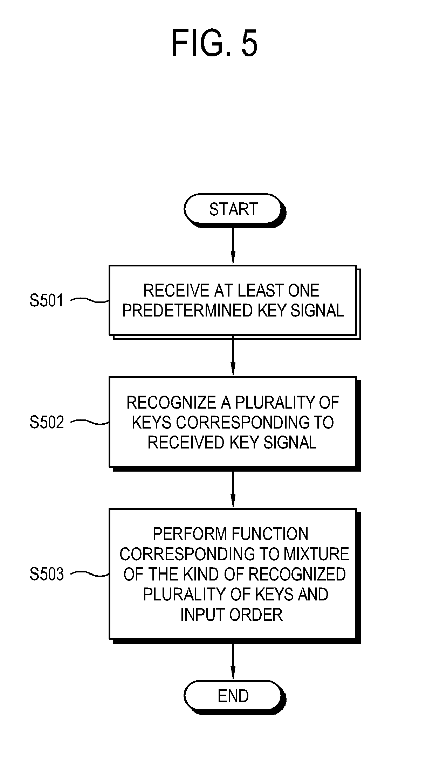

FIG. 5 illustrates a key input process according to another exemplary embodiment.

According to a key input process, an image processing apparatus 100 may receive a key selection by an input of a key signal.

The image processing apparatus 100 receives at least one predetermined key signal (S501). In this case, the image processing apparatus 100 recognizes a plurality of keys corresponding to the received key signal (S502).

The image processing apparatus 100 performs a function corresponding to a mixture of the kind of recognized plurality of keys and an input order (S503).

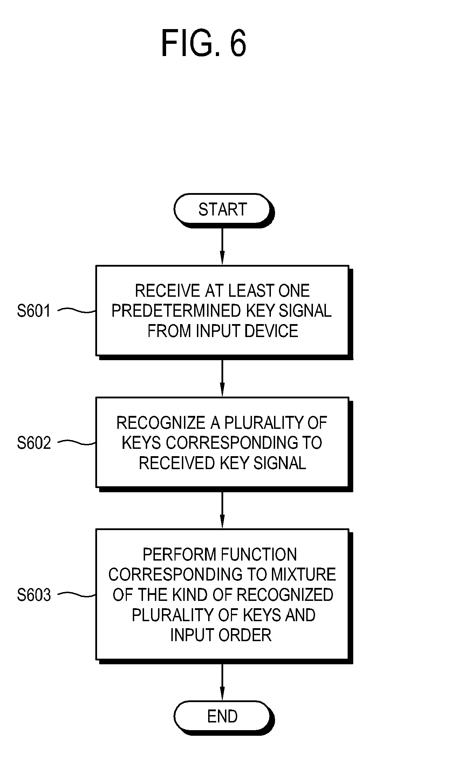

FIG. 6 illustrates a key input process according to still another exemplary embodiment.

According to a key input process, an image processing apparatus 100 may receive a key selection from a remote device.

The image processing apparatus 100 receives at least one predetermined key signal from an input device (S601). In this case, the image processing apparatus 100 recognizes a plurality of keys corresponding to the received key signal (S602).

The image processing apparatus 100 performs a function based on a mixture of the kind of keys of the recognized plurality of keys and the order of the input (S603).

As described, according to the present invention, a key input unit of a digital TV which has been conventionally configured by a plurality of buttons is configured by the small number of buttons so that a manufacturer can reduce cost. Also, a function such as a channel up/down, a volume up/down, etc. is supplied by a UI which is more intuitional than a conventional UI so that a user can more conveniently operate a digital TV. Furthermore, by defining additional button mixtures, more functions can be embodied with less buttons.

Although a few preferred embodiments have been shown and described, it will be appreciated by those skilled in the art that various changes and modifications might be made without departing from the scope of the invention, as defined in the appended claims.

## Claims

1. An image processing apparatus, comprising:
an image processing unit which processes an image for display on a display panel;
a user input unit which receives a key selection from a user; and
a control unit which generates a control signal to perform a first function corresponding to an input key if a single key of a plurality of keys is input, and to perform a second function corresponding to a mixture of input keys if at least two keys of the plurality of keys are input within a predetermined time.

2. The image processing apparatus according to claim 1, wherein the second function is determined depending on a mixture of the plurality of keys and the order in which the keys are inputted.

3. The image processing apparatus according to claim 1 or 2, wherein the user input unit receives the key selection by at least one of a contact to the display panel and an input of a key signal.

4. The image processing apparatus according to claim 1, 2 or 3, wherein the display panel comprises at least one predetermined recognition area sensing at least one contact of a user and a pointing device.

5. The image processing apparatus according to claim 4, wherein the control unit drives the display panel to sense at least one contact of the user and the pointing device only in the predetermined recognition area.

6. The image processing apparatus according to any preceding claim, wherein the user input unit receives at least one predetermined key signal.

7. The image processing apparatus according to claim 6, wherein the control unit controls the user input unit to receive only the predetermined key signal.

8. The image processing apparatus according to any preceding claim, wherein the plurality of keys are arranged in at least one of a linear shape, a circular shape and a three dimensional shape.

9. The image processing apparatus according to any preceding claim, wherein the key selection is performed by at least one of a touch action, a drag action, a touch action repeated predetermined times and a touch action continuing for a predetermined time.

10. An input control method of an image processing apparatus, comprising:
receiving a key selection from a user;
generating a control signal to perform a first function corresponding to an input key if a single key of a plurality of keys is input, and to perform a second function corresponding to a mixture of input keys if at least two keys of the plurality of keys are input within a predetermined time; and
performing the first function or the second function depending on the control signal.

11. The input control method of the image processing apparatus according to claim 10, wherein the second function is determined depending on a mixture of the plurality of keys and the order in which the keys are inputted.

12. The input control method of the image processing apparatus according to claim 10, wherein the key selection is received by at least one of a contact to a display panel and an input of a key signal.

13. The input control method of the image processing apparatus according to claim 10, wherein a display panel comprises at least one predetermined recognition area sensing at least one contact of a user and a pointing device.

14. The input control method of the image processing apparatus according to claim 10, wherein the plurality of keys are arranged in at least one of a linear shape, a circular shape and a three dimensional shape.

15. The input control method of the image processing apparatus according to claim 10, wherein the key selection is performed by at least one of a touch action, a drag action, a touch action repeated predetermined times and a touch action continuing for a predetermined time.
